Europäisches Patentamt

**European Patent Office**

**Office européen des brevets**

(11) Numéro de publication: **0 047 217**
**B1**

(12) **FASCICULE DE BREVET EUROPEEN**

(45) Date de publication du fascicule du brevet:
**10.04.85**

(21) Numéro de dépôt: **81401372.8**

(22) Date de dépôt: **01.09.81**

(51) Int. Cl.⁴: **F 16 K 17/14**

(54) **Soupape indicatrice de surpression d'une enceinte.**

(30) Priorité: **03.09.80 FR 8019011**

(43) Date de publication de la demande:
**10.03.82 Bulletin 82/10**

(45) Mention de la délivrance du brevet:
**10.04.85 Bulletin 85/15**

(84) Etats contractants désignés:
**BE DE GB IT**

(56) Documents cités:
**DE - C - 803 506**
**FR - A - 2 355 226**

(73) Titulaire: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Noe, Claude, Chemin de la Trévaresse, F-13770 Venelles (FR)**

(74) Mandataire: **Mongrédien, André et al, c/o BREVATOME 25, rue de Ponthieu, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne une soupape indicatrice de surpression d'une enceinte et permettant la dépressurisation de ladite enceinte.

Elle s'applique entre autres à l'indication de la surpression et à la mise en sécurité de conteneurs de stockage de produits radioactifs ou toxiques.

On sait que le stockage d'éléments combustibles irradiés ou de déchets radioactifs susceptibles d'un dégagement gazeux peut poser des problèmes de surpression lorsque ce stockage est réalisé dans des conteneurs étanches.

On connaît déjà une soupape correspondant au préambule de la revendication 1 et décrite dans le document DE-C-803 506. Cette soupape comporte un bouchon, pour fermer la bouche de sortie d'un récipient sous pression, et une broche de rupture fixée, du côté de la pression, sur le bouchon et ancrée dans la bouche de sortie. A partir d'une certaine pression, la broche se rompt, libérant le bouchon.

Cette soupape connue présente l'inconvénient de fonctionner «en tout ou rien», et ne permet pas d'indiquer l'existence d'une surpression dans l'enceinte tout en n'entraînant pas la dépressurisation de celle-ci.

La présente invention a pour but de remédier à cet inconvénient.

Elle a pour objet une soupape de constitution simple qui, adaptée à une enceinte permet non seulement de dépressuriser cette enceinte mais encore d'indiquer au préalable l'apparition d'une surpression dans celle-ci sans en provoquer, à ce stade, la dépressurisation.

De façon précise, la présente invention a pour objet une soupape indicatrice de surpression et permettant la dépressurisation d'une enceinte susceptible de contenir un fluide, ladite soupape comprenant:

— une chambre déformable, communiquant avec l'enceinte, de façon à être soumise à la pression du fluide

— des moyens de dépressurisation de l'enceinte, et

— une éprouvette de rupture apte à se rompre lorsque la pression du fluide dépasse une valeur maximale déterminée, cette éprouvette étant prévue pour commander, lors de sa rupture, lesdits moyens de dépressurisation de l'enceinte, caractérisée en ce que la soupape comprend en outre des moyens de signalisation d'une déformation de ladite chambre et une autre éprouvette de rupture liée mécaniquement à ladite éprouvette et apte à se rompre lorsque la pression du fluide dépasse une autre valeur déterminée inférieure à la valeur maximale, ladite autre éprouvette étant prévue pour que sa rupture provoque la déformation de ladite chambre de façon à signaler l'existence d'une surpression dans l'enceinte, grâce auxdits moyens de signalisation et avant que la pression du fluide n'atteigne ladite valeur maximale.

La présente invention présente l'avantage suivant: étant prévenu de l'existence d'une surpression dans l'enceinte, on peut essayer d'agir sur celle-ci pour diminuer sa pression interne sans nécessairement la vider du fluide qu'elle contient. En outre, dans l'un des modes de réalisation particulier de l'invention, on peut de façon avantageuse savoir qu'il y a eu dépressurisation — par sortie d'un doigt d'une longeur D d'un boîtier — même si l'on ne s'est pas auparavant aperçu de la surpression, alors que la soupape du document cité ne permet pas, en cas de dépressurisation, de savoir que celle-ci a eu lieu car, même si le bouchon est chassé, il reste piégé par un capuchon situé au-dessus de lui.

De préférence, des moyens de filtration sont interposés entre l'intérieur de l'enceinte et toute ouverture mettant ledit intérieur en communication avec l'intérieur de ladite chambre.

Selon un mode de réalisation préféré: la soupape objet de l'invention comprend en outre un boîtier rendu solidaire de ladite enceinte, et, à l'intérieur de ce boîtier, une pièce solidaire de l'enceinte et présentant une butée; ladite chambre déformable comprend un piston susceptible de se déplacer en translation dans le boîtier et un soufflet placé à l'intérieur dudit boîtier, reliant le piston à l'enceinte et délimitant ainsi l'intérieur de ladite chambre communiquant au moyen d'ouvertures avec l'intérieur de l'enceinte de façon que la face arrière du piston soit soumise à la pression dudit fluide; lesdits moyens de signalisation consistent en un doigt solidaire de la face avant dudit piston et susceptible de coulisser dans un orifice pratiqué dans le fond du boîtier; les éprouvettes sont placées à l'intérieur de ladite chambre, ladite éprouvette étant fixée par une extrémité à des moyens de liaison entre éprouvettes et par l'autre extrémité au piston, ladite autre éprouvette étant fixée par l'une de ses extrémités à l'enceinte et par l'autre extrémité aux moyens de liaison entre éprouvettes, ces moyens présentant un épaulement, la distance d séparant l'épaulement de la butée étant inférieure à la distance D séparant la face avant du piston du fond du boîtier, la butée étant disposée de telle façon qu'elle arrête la course du piston au moyen de l'épaulement lors de la rupture de ladite autre éprouvette, empêchant le piston de venir en appui sur le fond du boîtier; et lesdits moyens de dépressurisation de l'enceinte consistent en un conduit borgne pratiqué au travers du doigt, du piston et de ladite éprouvette, la rupture de ladite autre éprouvette permettant au doigt de sortir du fond du boîtier pour signaler l'existence d'une surpression dans l'enceinte et la rupture de ladite éprouvette crevant le conduit borgne et provoquant la dépressurisation de l'enceinte, dépressurisation indiquée par la sortie du doigt d'une longueur D du boîtier.

Selon une caractéristique particulière de l'invention, un contacteur électrique placé au voisinage dudit orifice, de préférence sur le boîtier et en contact avec le doigt, permet de signaler à distance la rupture de ladite autre éprouvette.

Selon une autre caractéristique particulière, un autre contacteur est prévu pour signaler à distance la rupture de ladite éprouvette.

Selon une autre caractéristique particulière de la soupape objet de l'invention, un tuyau flexible relie l'extrémité dudit doigt à un réservoir de récupération.

De préférence, un autre fluide remplit l'espace compris entre la paroi du boîtier, le piston et le soufflet et au moins un orifice perce cette paroi de façon à permettre l'écoulement «forcé» dudit autre fluide pour ralentir la course du piston après la rupture de ladite autre éprouvette.

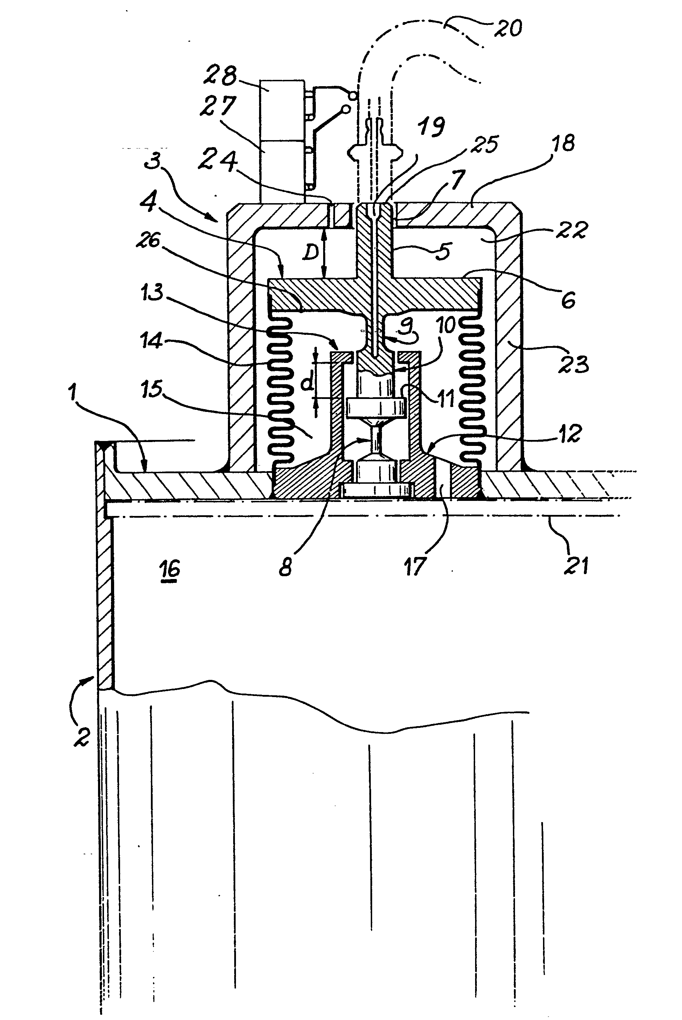

Les caractéristiques et avantages de l'invention apparaîtront mieux à la lecture de la description qui suit d'un exemple de réalisation donné à titre explicatif et nullement limitatif, en référence au dessin annexé sur lequel on a représenté une vue en coupe d'un mode de réalisation particulier de la soupape objet de l'invention.

Cette soupape, représentée sur le dessin, est par exemple montée sur le couvercle 1 d'un conteneur 2 lui-même représenté en coupe partielle sur le dessin et permettant le stockage de déchets radioactifs qui donnent par désintégration des produits gazeux dont la pression augmente au fur et à mesure de leur formation.

Cette soupape comprend:

– un boîtier qui est un cylindre creux 3 soudé par le bord au couvercle 1 du conteneur 2,

– un piston 4 susceptible de se déplacer en translation dans le cylindre creux 3,

– un doigt 5 solidaire de la face avant 6 du piston 4 et susceptible de coulisser dans un orifice 7 pratiqué dans le fond 18 du cylindre creux 3, et

– deux éprouvettes de rupture 8–9 placées à l'intérieur du cylindre creux 3 et reliées par des moyens de liaison constitués par un porte-éprouvette 10 qui présente sur sa partie arrière un épaulement 11.

La soupape selon l'invention comprend en outre dans le cylindre creux 3:

– une pièce 12 présentant une butée 13, et

– un soufflet 14 soudé à la face arrière 26 du piston 4 et au couvercle 1 du conteneur 2.

La pièce 12 est logée par l'une de ses extrémités dans une ouverture pratiquée dans le couvercle 1 du conteneur 2 et soudée par cette extrémité audit couvercle.

Le soufflet 14 entoure les éprouvettes de rupture 8–9 et délimite un espace 15 communiquant avec l'intérieur 16 du conteneur 2 grâce à des ouvertures 17.

La première éprouvette 8 est fixée par l'une de ses extrémités au conteneur 2 par l'intermédiaire de la pièce 12, et par l'autre extrémité au porte-éprouvettes 10; la deuxième éprouvette 9 est fixée par une extrémité à ce même porte-éprouvettes 10 et par l'autre extrémité au piston 4.

La résistance à la rupture de la seconde éprouvette 9 est supérieure à celle de la première 8. La distance d séparant l'épaulement 11 de la butée 13 est inférieure à la distance D séparant la face avant 6 du piston 4 du fond 18 du cylindre creux 3. Un conduit borgne 19 est usiné au travers du doigt 5, du piston 4 et de la seconde éprouvette 9.

Lorsque du gaz est engendré dans le conteneur 2 par les produits stockés, ce gaz exerce une pression sur la face arrière 26 du piston 4 qui exerce à son tour une traction sur les éprouvettes 8 et 9. La nature (type de matériau) et les dimensions des éprouvettes de rupture sont déterminées en fonction d'un seuil de surpression fixé, c'est-à-dire en fonction de la force de traction exercée par le piston 4 sur les éprouvettes 8 et 9 pour un seuil de pression donné.

Lorsque la pression du gaz dépasse une première valeur déterminée, par exemple 5 bars, la première éprouvette 8 se rompt. L'ensemble piston 4-porte-éprouvettes 10 se déplace alors en translation. La butée 13 est disposée de façon à arrêter l'épaulement 11 lors de ce déplacement. Ce dernier s'effectue donc sur une longueur égale à la distance d. Le doigt 5, solidaire du piston 4, se déplace de cette même longueur et sort du fond 18 du cylindre creux 3. Cette saillie du doigt 5, indiquant l'existence d'une surpression, peut alors être enregistrée par visualisation directe, ou électriquement à l'aide d'un contacteur 27 placé sur le cylindre creux 3 et à l'extérieur de celui-ci, au voisinage de l'orifice 7, ou encore par tout autre moyen imaginable par l'homme de l'art.

Après la rupture de la première éprouvette 8, l'espace 15 reste étanche au gaz, et le piston 4 n'est pas en butée contre le fond 18 du cylindre creux 3: il en est situé à une distance D–d. Lorsque la pression du gaz dépasse une seconde valeur déterminée supérieure à la première, par exemple 11 bars, la seconde éprouvette 9 se rompt, ce qui crève le conduit brogne 19 et permet au gaz de s'échapper, provoquant la dépressurisation du conteneur 2. Cette dépressurisation est indiquée par la sortie du doigt 5 d'une longueur D (supérieure à d) du cylindre creux 3, et peut être ainsi enregistrée par visualisation directe. Elle peut aussi être enregistrée à distance à l'aide d'un autre contacteur électrique 28 du genre du contacteur électrique 27 mais placé au-dessus de ce dernier par rapport au cylindre creux 3.

Suivant la nature et la toxicité du gaz, celui-ci peut être récupéré en adaptant sur l'extrémité 25 du doigt 5 un tuyau flexible 20 relié à un réservoir de récupération (non représenté sur le dessin).

Des moyens de filtration 21 consistant par exemple en une grille, sont interposés entre l'intérieur 16 du conteneur 2 et toute ouverture, comme par exemple les ouvertures 17, mettant ledit intérieur 16 en contact avec l'espace 15 délimité par le soufflet 14 et le piston 4, pour éviter tout blocage possible de la soupape objet de l'invention par des fragments de déchets placés dans le conteneur 2.

Un fluide (liquide ou gaz) remplit l'espace 22 compris entre la paroi 23 du cylindre creux 3, le piston 4 et le soufflet 14. Au moins un orifice 24 perce cette paroi 23. Il perce par exemple le fond 18 du cylindre creux 3. La section de cet orifice 24 est adaptée à la nature du fluide remplissant l'espace 22. L'écoulement «forcé» de ce fluide à travers l'orifice 24 et à travers le «jeu» du doigt 5 permet, après rupture de la première éprouvette 8, de ralentir la course du piston 4. On évite ainsi la rupture anticipée de la seconde éprouvette 9

qui pourrait être provoquée par l'énergie cinétique acquise par l'ensemble porte-éprouvettes 10-piston 4-doigt 5.

Bien entendu, on ne sortirait pas du cadre de l'invention en utilisant plus de deux éprouvettes de rupture placées «en série» et se rompant pour différentes valeurs de la pression régnant à l'intérieur du conteneur. On peut également monter plus d'une soupape objet de l'invention sur le couvercle du conteneur.

La soupape objet de l'invention est un dispositif de sécurité qui peut s'adapter non seulement à un conteneur susceptible de renfermer un gaz, mais encore, de façon générale, à toute enceinte (conteneur, bouteille, conduit) susceptible de contenir un fluide – liquide ou gaz (évaporation d'un liquide cryogénique, gaz toxique, gaz radioactif, vapeur d'eau,..) – dont la pression risque d'augmenter et de faire exploser l'enceinte.

**Revendications**

1. Soupape indicatrice de surpression et permettant la dépressurisation d'une enceinte (2) susceptible de contenir un fluide, ladite soupape comprenant:
– une chambre (4, 14) déformable, communiquant avec l'enceinte (2), de façon à être soumise à la pression du fluide,
– des moyens (19) de dépressurisation de l'enceinte (2), et
– une éprouvette de rupture (9) apte à se rompre lorsque la pression du fluide dépasse une valeur maximale déterminée, cette éprouvette étant prévue pour commander, lors de sa rupture, lesdits moyens (19) de dépressurisation de l'enceinte (2),
caractérisée en ce que la soupape comprend en outre des moyens (5) de signalisation d'une déformation de ladite chambre (4, 14) et une autre éprouvette de rupture (8) liée mécaniquement à ladite éprouvette (9) et apte à se rompre lorsque la pression du fluide dépasse une autre valeur déterminée inférieure à la valeur maximale, ladite autre éprouvette (8) étant prévue pour que sa rupture provoque la déformation de ladite chambre (4, 14) de façon à signaler l'existence d'une surpression dans l'enceinte (2), grâce auxdits moyens (5) de signalisation et avant que la pression du fluide n'atteigne ladite valeur maximale.

2. Soupape selon la revendication 1, caractérisée en ce que des moyens de filtration (21) sont interposés entre l'intérieur (16) de l'enceinte (2) et toute ouverture (17) mettant ledit intérieur (16) en communication avec l'intérieur (15) de ladite chambre (4, 14).

3. Soupape selon l'une quelconque des revendications 1 et 2, caractérisée en ce qu'elle comprend en outre un boîtier (3) rendu solidaire de ladite enceinte (2), et, à l'intérieur de ce boîtier (3), une pièce (12) solidaire de l'enceinte (2) et présentant une butée (13), en ce que ladite chambre (4, 14) déformable comprend un piston (4) susceptible de se déplacer en translation dans le boîtier (3) et un soufflet (14) placé à l'intérieur dudit boîtier (3), reliant le piston (4) à l'enceinte (2) et délimitant ainsi l'intérieur (15) de ladite chambre (4, 14) communiquant au moyen d'ouvertures (17) avec l'intérieur (16) de l'enceinte (2) de façon que la face arrière (26) du piston (4) soit soumise à la pression dudit fluide, en ce que lesdits moyens de signalisation consistent en un doigt (5) solidaire de la face avant (6) dudit piston (4) et susceptible de coulisser dans un orifice (7) pratiqué dans le fond (18) du boîtier (3), en ce que les éprouvettes (8, 9) sont placées à l'intérieur de ladite chambre (4, 14), ladite éprouvette (9) étant fixée par une extrémité à des moyens de liaison (10) entre éprouvettes (8, 9) et par l'autre extrémité au piston (4), ladite autre éprouvette (8) étant fixée par l'une de ses extrémités à l'enceinte (2) et par l'autre extrémité aux moyens de liaison (10) entre éprouvettes (8, 9), ces moyens (10) présentant un épaulement (11), la distance (d) séparant l'épaulement (11) de la butée (13) étant inférieure à la distance (D) séparant la face avant (6) du piston (4) du fond (18) du boîtier (3), la butée (13) étant disposée de telle façon qu'elle arrête la course du piston (4) au moyen de l'épaulement (11) lors de la rupture de ladite autre éprouvette (8), empêchant le piston (4) de venir en appui sur le fond (18) du boîtier (3), et en ce que lesdits moyens de dépressurisation de l'enceinte (2) consistent en un conduit borgne (19) pratiqué au travers du doigt (5), du piston (4) et de ladite éprouvette (9), la rupture de ladite autre éprouvette (8) permettant au doigt (5) de sortir du fond (18) du boîtier (3) pour signaler l'existence d'une surpression dans l'enceinte (2) et la rupture de ladite éprouvette (9) crevant le conduit borgne et provoquant la dépressurisation de l'enceinte (2), dépressurisation indiquée par la sortie du doigt (5) d'une longueur D du boîtier (3).

4. Soupape selon la revendication 3, caractérisée en ce qu'un contacteur électrique (27) placé au voisinage dudit orifice (7) permet de signaler à distance la rupture de ladite autre éprouvette (8).

5. Soupape selon l'une quelconque des revendications 3 et 4, caractérisée en ce qu'un autre contacteur électrique (28) est prévu pour signaler à distance la rupture de ladite éprouvette (9).

6. Soupape selon l'une quelconque des revendications 3 à 5, caractérisée en ce qu'un tuyau flexible (20) relie l'extrémité (25) du doigt (5) à un réservoir de récupération.

7. Soupape selon l'une quelconque des revendications 3 à 6, caractérisée en ce qu'un autre fluide remplit l'espace (22) compris entre la paroi (23) du boîtier (3), le piston (4) et le soufflet (14) et qu'au moins un orifice (24) perce cette paroi (23) de façon à permettre l'écoulement «forcé» dudit autre fluide pour ralentir la course du piston (5) après la rupture de ladite autre éprouvette (8).

8. Application de la soupape selon l'une quelconque des revendications 1 à 7, à l'indication de la surpression et à la mise en sécurité de conteneurs de stockage de produits radioactifs ou toxiques.

## Claims

1. A valve indicating over-pressure and permitting depressurization of a container (2) adapted to contain a fluid, said valve comprising:
- a deformable chamber (4, 14) communicating with the container (2), whereby to be exposed to the pressure of the fluid,
- depressurization means (19) for the container (2), and
- a first breakable member (9) adapted to be broken when the fluid pressure exceeds a predetermined maximum value, said member being provided to actuate, during its breakage, said depressurization means (19) for the container (2), characterized in that said valve additionally comprises means (5) for indicating deformation of said chamber (4, 14) and a second breakable member (8) mechanically connected to said first breakable member (9) and adapted to be broken when the fluid pressure exceeds a second predetermined value, less than the maximum value, said second member (8) being provided so that its breakage results in deformation of said chamber (4, 14) whereby to signal existence of over-pressure in the container (2), as a result of said signalling means (5), before the fluid pressure attains said maximum value.

2. Valve according to Claim 1, characterized in that filtering means (21) are interposed between the interior (16) of the container (2) and any opening (17) placing said interior (16) in communication with the interior (15) of said chamber (4, 14).

3. Valve according to either of Claims 1 and 2, characterized in that it additionally comprises a casing (3) fixed to said container (2), and internally of said casing (3), a plug (12) fixed to the container (2) and having a stop (13), and in that said deformable chamber (4, 14) comprises a piston (4) adapted to move longitudinally within the casing (3) and a bellows (14) located internally of said casing (3), connecting the piston (4) to the container (2) and thereby delimiting the interior (15) of said chamber (4, 14), communicating through openings (17) with the interior (16) of the container (2), whereby the rear surface (26) of the piston (4) is exposed to the pressure of said fluid, and in that said indicating means comprise a finger (4) unitary with the front surface (6) of said piston (4) and adapted to slide in an orifice (7) formed in the end (18) of the casing (3), and in that the breakable members (8, 9) are located internally of said chamber (4, 14), said first breakable member (9) being fixed at one end to a connecting piece (10) between the breakable members (8, 9), and at its other end to piston (4), said second breakable member (8) being fixed by one of its ends to the container (2) and by the other end to the connecting piece (10) between the breakable members (8, 9), said connecting piece (10) having a flange (11), the distance (d) separating the flange (11) from the stop (13) being less than the distance (D) separating the front surface (6) of the piston (4) from the end (18) of the casing (3), the stop (13) being located such that it halts movement of the piston (4) by means of the flange (11) during breakage of said second breakable member (8) preventing the piston (4) from contacting the end (18) of the casing (3), and in that said depressurization means for the container (2) comprise a blind conduit (19) formed within the finger (5) of said piston (4) and said breakable member (9), breakage of said second breakable member (8) enabling the finger (5) to move from the end (18) of the casing (3) to indicate the existence of over-pressure within the container (2) and the breakage of said first breakable member (9) opening the blind conduit and producing depressurization of the container (2), said depressurization being indicated by exposure of the finger (5) by length (D) from the casing (3).

4. Valve according to Claim 3, characterized in that an electric contact (27) placed near said orifice (7) enables remote signalling of breakage of said second breakable member (8).

5. Valve according to either of Claims 3 and 4, characterized in that a second electrical contact (28) is provided to signal remotely breakage of said first breakable member (9).

6. Valve according to any one of Claims 3 to 5, characterized in that a flexible tube (20) connects the end (25) of the finger (5) and a recovery reservoir.

7. Valve according to any one of Claims 3 to 6, characterized in that a second fluid fills the space (22) between the wall (23) of the casing (3), the piston (4) and the bellows (14) and in that at least one orifice (24) pierces said wall (23) whereby to permit forced flow of said second fluid to hinder movement of the piston (5) after breakage of said second breakable member (8).

8. Application of the valve according to any one of Claims 1 to 7, for indication of over-pressure and secure maintenance of storage containers for radioactive or toxic products.

## Patentansprüche

1. Überdruck-Anzeigeventil, das die Dekompression eines Behälters (2) erlaubt, der zur Aufnahme eines Fluides geeignet ist, besagtes Ventil enthaltend:
- eine formveränderliche Kammer (4, 14), die mit dem Behälter (2) so in Verbindung steht, dass sie dem Druck des Fluides unterworfen ist,
- eine Einrichtung (19) zur Dekompression des Behälters (2), und
- einen Zerreisskörper (9), der dazu eingerichtet ist, zu zerreissen, wenn der Druck des Fluides einen vorbestimmten Maximalwert übersteigt, wobei der Zerreisskörper vorgesehen ist, bei seinem Bruch die Dekompressionseinrichtung (19) des Behälters (2) zu steuern, dadurch gekennzeichnet, dass das Ventil weiterhin eine Einrichtung (5) zur Anzeige einer Formänderung der genannten Kammer (4, 14) und einen weiteren Zerreisskörper (8) aufweist, der mechanisch mit dem genannten Zerreisskörper (9) verbunden und dazu eingerichtet ist, zu zerbrechen, wenn der Druck des Fluides einen anderen vorbestimmten, unterhalb des Maximalwertes liegenden Wert überschreitet, wobei der zweite Zerreisskörper (8) dazu vorgesehen ist, dass sein Bruch eine Verformung der genannten Kammer (4, 14) solcher Art hervorruft, dass die Existenz eines Überdrucks im Behälter (2) aufgrund der genannten Anzeigeeinrichtung (5) und bevor der Fluiddruck den genannten Maximalwert erreicht, anzeigt.

2. Ventil nach Anspruch 1, dadurch gekennzeichnet, dass Filtereinrichtungen (21) zwischen dem Innenraum (16) des Behälters (2) und jeder Öffnung (17), die genannten Innenraum (16) mit dem Inneren (15) der genannten Kammer (4, 14) verbindet, angeordnet sind.

3. Ventil nach einem der Ansprüche 1 und 2, dadurch gekennzeichnet, dass es weiterhin einen mit dem Behälter (2) fest verbundenes Gehäuse (3) und im Inneren des Gehäuses (3) ein fest mit dem Behälter (2) verbundenes Bauteil (12), das einen Anschlag (13) darbietet, enthält, dass die genannte formveränderliche Kammer (4, 14) einen Kolben (4), der dazu eingerichtet ist, sich in dem Gehäuse (3) geradlinig zu bewegen, und einen im Inneren des Gehäuses (3) angeordneten Balg (14) aufweist, der den Kolben (4) mit dem Behälter (2) verbindet und auf diese Weise den Innenraum (15) der genannten Kammer (4, 14) umschliesst und über Öffnungen (17) mit dem Innenraum (16) des Behälters (2) so verbunden ist, dass die Rückseite (26) des Kolbens (4) dem Druck des Fluides ausgesetzt ist, dass die genannte Anzeigeeinrichtung aus einem Zapfen (5) besteht, der fest mit der Vorderseite (6) des Kolbens (4) verbunden ist und dazu eingerichtet ist, in einem Loch (7) zu gleiten, das im Boden (18) des Gehäuses (3) ausgebildet ist, dass die Zerreisskörper (8, 9) im Inneren der genannten Kammer (4, 14) angeordnet sind, wobei der Zerreisskörper (9) am einen Ende mit einer Verbindungseinrichtung (10) zwischen den Zerreisskörpern (8, 9) und am anderen Ende mit dem Kolben (4) verbunden ist, der andere Zerreisskörper (8) mit einem seiner Enden mit dem Behälter (2) und mit dem anderen Ende mit der Verbindungseinrichtung (10) zwischen den Zerreisskörpern (8, 9) verbunden ist, wobei diese Einrichtung (10) einen Bund (11) aufweist, dessen Distanz (d) zu dem Anschlag (13) geringer ist, als die Distanz (D), die die Vorderseite (6) des Kolbens (4) vom Boden (18) des Gehäuses (3) trennt, der Anschlag (13) so angeordnet ist, dass er den Lauf des Kolbens (4) mittels des Bundes (11) anhält, wenn der zweite Zerreisskörper (8) zerrissen ist, wodurch der Kolben (4) daran gehindert wird, auf den Boden (18) des Gehäuses (3) aufzutreffen, und dass die Einrichtung zur Dekompression des Behälters (2) aus einer blinden Leitung (19) besteht, die durch den Zapfen (5), den Kolben (4) und den Zerreisskörper (9) verläuft, wobei der Bruch des anderen Zerreisskörpers (8) dem Zapfen (5) erlaubt, aus dem Boden (18) des Gehäuses (3) auszutreten, um die Existenz eines Überdrucks in dem Behälter (2) anzuzeigen und den Bruch des genannten Zerreisskörpers (9) die blinde Leitung aufbricht und eine Dekompression des Behälters (2) hervorruft, die durch das Austreten des Zapfens (5) auf eine Länge (D) aus dem Gehäuse (3) angezeigt wird.

4. Ventil nach Anspruch 3, dadurch gekennzeichnet, dass ein elektrischer Kontakt (27) in Nachbarschaft zur Bohrung (7) angeordnet ist, der die Fernanzeige eines Bruchs des genannten zweiten Zerreisskörpers (8) erlaubt.

5. Ventil nach einem der Ansprüche 3 und 4, dadurch gekennzeichnet, dass ein weiterer elektrischer Kontakt (28) vorgesehen ist, um eine Fernanzeige des Bruchs des genannten Zerreisskörpers (9) anzuzeigen.

6. Ventil nach einem der Ansprüche 3 bis 5, dadurch gekennzeichnet, dass ein flexibler Schlauch (20) das Ende (25) des Zapfens (5) mit einem Auffanggefäss verbindet.

7. Ventil nach einem der Ansprüche 3 bis 6, dadurch gekennzeichnet, dass ein weiteres Fluid den Zwischenraum (22) füllt, der zwischen der Wand (23) des Gehäuses (3), dem Kolben (4) und dem Balg (14) ausgebildet ist und dass wenigstens eine Öffnung (24) diese Wand (23) so durchdringt, dass das «erzwungene» Ausströmen des anderen Fluides zum Verlangsamen des Laufs des Kolbens (5) nach dem Bruch des genannten zweiten Zerreisskörpers (8) ermöglicht wird.

8. Anwendung des Ventils nach einem der Ansprüche 1 bis 7 zur Anzeige des Überdrucks und als Sicherheitseinrichtung für Lagerbehälter für radioaktive oder giftige Produkte.